# EUROPÄISCHE PATENTSCHRIFT

(11) **EP 3 976 447 B1**
(45) Veröffentlichungstag und Bekanntmachung des Hinweises auf die Patenterteilung: **21.06.2023**
(21) Anmeldenummer: 20724478.1
(22) Anmeldetag: 06.05.2020
(51) Int. Cl.: B62D 53/00, B62D 65/18, G05D 1/02

(54) **SYSTEM UMFASSEND EINEN ROUTENZUG UND MINDESTENS EINE STATIONÄRE ÜBERNAHMESTATION**
SYSTEM COMPRISING A TUGGER TRAIN AND AT LEAST ONE STATIONARY TRANSFER STATION
SYSTÈME COMPRENANT UN CHARIOT TRACTEUR ET AU MOINS UN POSTE DE TRANSFERT STATIONNAIRE

(30) Priorität: 27.05.2019 DE 102019114134
(43) Veröffentlichungstag der Anmeldung: 06.04.2022
(73) Patentinhaber: LR Intralogistik GmbH, 84109 Wörth a. d. Isar (DE)
(72) Erfinder: BERGHAMMER, Fritz, 84028 Landshut (DE)
(74) Vertreter: Patentship Patentanwaltgesellschaft
(86) Internationale Anmeldenummer: PCT/EP2020/062547
(87) Internationale Veröffentlichungsnummer: WO 2020/239375

(56) Entgegenhaltungen:
- DE-A1-102012 016 489
- DE-A1-102016 212 628
- DE-U1-202015 105 184
- US-A1- 2003 146 031

## Beschreibung

Die Erfindung betrifft ein System umfassend einen Routenzug, der ein Zugfahrzeug und mindestens einen Routenzuganhänger aufweist, und mindestes eine stationäre Übernahmestation zur Übergabe von Lasten zwischen dem Routenzuganhänger und der stationären Übernahmestation, wobei sich der Routenzuganhänger zur Lastübergabe in einer definierten Umschlagposition relativ zur stationären Übernahmestation befindet.

Für den werksinternen Transport von Lasten, beispielsweise Paletten oder Gitterboxen zur Aufnahme von Ladungen, werden in zunehmendem Umfang Routenzüge eingesetzt, deren Routenzuganhänger von einem Zugfahrzeug zu den gewünschten Übernahmestationen verfahren werden.

An den gewünschten Übernahmestation muss sich der Routenzuganhänger in einer definierten Umschlagposition relativ zur stationären Übernahmestation befinden, um eine Last zwischen dem Routenzuganhänger und der stationären Übernahmestation übergeben zu können, d.h. von dem Routenzuganhänger auf die stationäre Übernahmestation zu übergeben oder von stationären Übernahmestation auf den Routenzuganhänger zu übergeben.

Sofern der Routenzug autonom und somit fahrerlos betrieben ist, ist es bekannt, für die stationären Übernahmestationen entsprechende Haltepunkte für die definierten Umschlagpositionen der Routenzuganhänger in einer den Bewegungsweg des Routenzugs steuernden Steuerungssoftware zu programmieren, an denen der autonom betriebene Routenzug mit den Routenzuganhängern zur Lastübergabe anhält. Um nach dem Anhalten des Routenzugs an den vorher einprogrammierten Haltepunkten die richtige Position des Routenzuganhängers zu überprüfen, ist es bekannt, nach dem Anhalten des Routenzugs an dem entsprechenden Haltepunkt an einer Übernahmestation mit Sensoren zu überprüfen, ob die definierten Umschlagposition an der Übernahmestation von dem Routenzuganhänger korrekt erzielt wurde, bevor die Lastübergabe durchgeführt wird. Dadurch entsteht jedoch ein hoher Programmieraufwand, um die entsprechenden Haltepunkte in der den Bewegungsweg des Routenzugs steuernden Steuerungssoftware zu programmieren. Dieser Programmieraufwand für die Haltepunkte wird noch erhöht, wenn aufgrund von betrieblichen Anpassungen die Aufstellungsorte der ortsfesten Übernahmestationen verändert werden.

Aus der DE 10 2012 016 489 A1 ist ein gattungsgemäßes System mit den Merkmalen des Oberbegriffs des Patentanspruchs 1 bekannt.

Die DE 10 2016 212 628 A1 offenbart eine Transporteinheit sowie ein Verfahren zum Be- und/oder Entladen einer Transporteinheit.

Aus der DE 20 2015 105 184 U1 ist eine Vorrichtung zur Lastübergabe bekannt.

Die US 2003/146031 A1 offenbart ein Verfahren zum Erstellen und Verwenden kommentierter elektronischer Spuren auf der Straße für Bodenfahrzeuge, um die Fahraufgabe mit zusätzlicher Sicherheit, Effizienz und Wirtschaftlichkeit zu erleichtern.

Der vorliegenden Erfindung liegt die Aufgabe zugrunde, ein System der eingangs genannten Gattung zur Verfügung zu stellen, das die genannten Nachteile vermeidet.

Diese Aufgabe wird erfindungsgemäß dadurch gelöst, dass die stationäre Übernahmestation mit einer Markierung versehen ist, die an einer dem Routenzug zugewandten Stirnseite der stationären Übernahmestation angeordnet ist und sich entlang der dem Routenzug zugewandten Stirnseite der stationäre Übernahmestation erstreckt, und der Routenzug mit mindestens einer die Markierung erfassenden Sensoreinrichtung versehen ist, wobei die Sensoreinrichtung mit einer Fahrsteuerung des Routenzugs in Wirkverbindung steht und die Fahrsteuerung derart ausgebildet ist, dass mittels der von der Sensoreinrichtung des Routenzugs erfassten Markierung an der stationären Übernahmestation der Routenzuganhänger an der stationären Übernahmestation in der definierten Umschlagposition angehalten wird.

Erfindungsgemäß wird somit mit einer an dem Routenzug angeordneten Sensoreinrichtung beim Vorbeifahren des Routenzugs an der stationären Übernahmestation die an der stationären Übernahmestation angeordnete Markierung erfasst und anhand der von der Sensoreinrichtung erfassten Markierung durch den Eingriff auf die Fahrsteuerung der Routenzuganhänger an der stationären Übernahmestation in der definierten Umschlagposition angehalten. Die Markierung an der stationären Übernahmestation gibt somit die definierte Umschlagposition vor, die mittels der Sensoreinrichtung und deren Eingriff auf die Fahrsteuerung des Routenzugs angefahren wird. Bei der Erfindung findet somit der Routenzug die definierten Umschlagpositionen und somit die Haltepunkte an den stationären Übernahmestationen für die Lastübergabe selbst und es müssen keine Haltepunkte vorab für die definierten Umschlagpositionen programmiert werden.

Gemäß einer vorteilhaften Ausführungsform der Erfindung ist die Fahrsteuerung derart ausgebildet, dass bei Erfassen der Markierung an der stationären Übernahmestation durch die Sensoreinrichtung des Routenzugs ein Abbremsen des Routenzugs durchgeführt wird, derart, dass der Routenzuganhänger in der definierten Umschlagposition an der stationären Übernahmestation zum Stillstand kommt. Dadurch dass sich die Markierung entlang der dem Routenzug zugewandten Stirnseite der stationäre Übernahmestation über eine gewisse Längserstreckung erstreckt und sich somit entlang der Fahrstrecke erstreckt, wenn der Routenzug an der Übernahmestation vorbeifährt, erstreckt sich die Markierung auch über eine entsprechende Fahrstrecke des Routenzugs, so dass ein Bremssignal erzeugt werden kann, wenn die Sensoreinrichtung den Beginn der Markierung erfasst. Sofern die Längserstreckung der Markierung bis zu der definierten Umschlagposition bekannt ist bzw. die Längserstreckung der Markierung mit der Sensoreinrichtung vermessen wird, kann somit der Routenzuganhänger mit einer geeigneten Bremsrampe in einfacher Weise an der definierten Umschlagposition an der Übernahmestation angehalten und zum Stillstand gebracht werden.

Gemäß einer vorteilhaften Ausführungsform der Erfindung ist die Markierung achssymmetrisch zu einer Mittenlängsachse der stationären Übernahmestation angeordnet. Dadurch werden besondere Vorteile erzielt, da der Routenzug die stationäre Übernahmestation von beiden Richtungen anfahren kann und mittels der Markierung die definierte Umschlagposition finden und an dieser anhalten kann.

Gemäß einer vorteilhaften Ausgestaltungsform der Erfindung weist die Markierung mehrere senkrecht angeordnete Balken mit variierenden Abständen zwischen zwei benachbart angeordneten Balken auf. Die Markierung ist somit in der Art eines Barcodes bzw. eines Strichcodes ausgeführt. Eine derartige Markierung kann auf einfache Weise an der stationären Übernahmestation hergestellt werden, beispielsweise aufgeklebt werden.

Weitere Vorteile ergeben sich, wenn gemäß einer Weiterbildung der Erfindung sich die Abstände zwischen zwei benachbart angeordneten Balken zu der Mittenlängsachse der stationären Übernahmestation verringern. Hiermit wird erzielt, dass die Markierung auch eine Richtungsinformation enthält, so dass erkannt werden kann, ob sich der Routenzug der definierten Umschlagposition an einer Übernahmestation annähert, da sich hierbei die Abstände zwischen zwei benachbart angeordneten Balken verringern, oder ob sich der Routenzug von der definierten Umschlagposition an einer Übernahmestation wegbewegt, da sich hierbei die Abstände zwischen zwei benachbart angeordneten Balken vergrößern.

Bevorzugt weisen die Balken der Markierung jeweils eine identische Gestalt auf. Dadurch ist die Markierung auf einfache Weise herstellbar.

Die Sensoreinrichtung ist gemäß einer vorteilhaften Ausgestaltungsform der Erfindung an dem Routenzug mit einer in Querrichtung des Routenzugs ausgerichteten Erfassungsrichtung angeordnet. Die Erfassungsrichtung der Sensoreinrichtung ist somit quer zur Fahrtrichtung des Routenzugs orientiert. Mit einer derartigen Orientierung der Sensoreinrichtung an dem Routenzug kann die an einer dem Routenzug zugewandten Stirnseite der stationäre Übernahmestation angeordnete Markierung in einfacher und sicherer Weise erfasst werden.

Gemäß einer vorteilhaften Weiterbildung der Erfindung sind an der in Fahrtrichtung des Routenzugs linken Seite und rechten Seite des Routenzugs jeweils eine Sensoreinrichtung angeordnet. Dadurch ist der Routenzug universal einsetzbar und kann für eine Lastübergabe zur linken Seite und zur rechten Seite eingesetzt werden.

Bei dem erfindungsgemäßen System kann gemäß einer Ausführungsform der Erfindung das Zugfahrzeug des Routenzugs mit der Sensoreinrichtung versehen sein.

Bei dem erfindungsgemäßen System kann gemäß einer bevorzugten Ausführungsform der Erfindung jeder Routenzuganhänger mit jeweils mindestens einer Sensoreinrichtung versehen sein. Hierdurch werden weitere Vorteile erzielt, da jeder Routenzuganhänger mit seiner Sensoreinrichtung die entsprechende definierte Umschlagposition an den Übernahmestationen finden und anfahren kann. Insbesondere wenn Routenzüge mit unterschiedlichen alternativen Deichselkonzepten ausgeführt werden, mit denen die Routenzuganhänger an das Zugfahrzeug gekoppelt sind, beispielsweise einem langen Deichsellenker in Fahrzeuglängsrichtung oder einer kurzen Scherendeichsel mit in Fahrzeugquerrichtung verlaufenden Lenkern, führt die Anordnung der Sensoreinrichtung an jedem Routenzuganhänger zu besonderen Vorteilen, da das verwendete Deichselkonzept auf das Anfahren und Anhalten an den definierten Umschlagpositionen keinen Einfluss hat.

Bevorzugt ist die Sensoreinrichtung in Fahrzeuglängsrichtung des Routenzuganhängers im Wesentlichen mittig angeordnet. Dadurch werden besondere Vorteile erzielt, da der Routenzug die stationäre Übernahmestation von beiden Richtungen anfahren kann und mittels der von der Sensoreinrichtung erfassten Markierung die definierte Umschlagposition finden und an dieser anhalten kann.

Besondere Vorteile ergeben sich, wenn der Routenzug autonom und somit fahrerlos betrieben ist. Für den autonomen Routenzug muss bei der Erfindung nur eine bestimmte Fahrspur vorgegeben werden, gemäß der der Routenzug in einem definierten seitlichen Abstand entlang der Übernahmestationen vorbeifährt. Es müssen jedoch keine Haltepunkte für die definierten Umschlagpositionen an den jeweiligen Übernahmestationen programmiert werden, da der Routenzug bzw. die jeweiligen Routenzuganhänger mit der die Markierungen an den Übernahmestationen erfassenden Sensoreinrichtung die definierten Umschlagpositionen an den jeweiligen Übernahmestationen selbst finden und an diesen anhält. Bei einem autonomen Routenzug kann das Zugfahrzeug als fahrerlos und automatisiert betriebener Schlepper ausgebildet sein oder alternativ von einem fahrerlosen Transportsystem, einem sogenannten FTS, gebildet sein.

Gemäß einer bevorzugten Weiterbildung der Erfindung weist der Routenzuganhänger und/oder die Übernahmestation eine Fördereinrichtung zur Lastübergabe einer Last auf. Dadurch kann der Routenzuganhänger mittels der entsprechenden Fördereinrichtung eine Last automatisch an die Übernahmestation übergeben oder von der Übernahmestation aufnehmen, wodurch bei einem autonomen Routenzug ein vollautomatischer Betrieb erzielt wird. Die Fördereinrichtungen können als motorisch angetriebene Rollenbahn, als Bandförderer oder als Kettenförderer ausgebildet sein.

Besondere Vorteile ergeben sich, wenn gemäß einer Weiterbildung der Erfindung die Markierung eine Information über die Identität der stationären Übernahmestation enthält. Die Information über die Identität der stationären Übernahmestation kann als Name oder Nummer der stationären Übernahmestation ausgebildet sein. Mit der Information über die Identität der stationären Übernahmestation können mehrere stationäre Übernahmestationen eindeutig unterschieden werden. Mittels der Sensoreinrichtung an dem Routenzug kann somit weiterhin die Übernahmestation identifiziert werden, wenn der Routenzug an der Übernahmestation entlangfährt und mit der Sensoreinrichtung die Markierung an der Übernahmestation erfasst. Sofern der Routenzug einen Auftrag erhält, mit einem bestimmten angehängten Routenzuganhänger eine Last an einer bestimmten Übernahmestation zu übergeben, muss somit nur eine Fahrspur definiert und vorgegeben werden, mit der der Routenzug an der Übernahmestation entlangfährt und mittels der Sensoreinrichtung des Routenzugs kann die an der Übernahmestation angebrachten Markierung erfasst werden und über die Markierung die richtige Übernahmestation für die Lastübergabe erkannt werden und an dieser in der definierten Umschlagposition angehalten werden.

Die Sensoreinrichtung ist gemäß einer vorteilhaften Ausführungsform der Erfindung als Barcodeleser ausgebildet. Mit einem an dem Routenzug angebrachten Barcodeleser als Sensoreinrichtung können die an den Übernahmestationen angebrachten Markierungen auf einfache Weise erfasst werden.

Die Erfindung betrifft weiterhin ein Verfahren zum Betrieb eines erfindungsgemäßen Systems, wobei zur Inbetriebnahme des Systems mit dem Routenzug, insbesondere einem autonomen Routenzug, eine Lernfahrt entlang der stationären Übernahmestationen durchgeführt wird, wobei mittels der Sensoreinrichtung an jeder stationären Übernahmestation die Informationen über die Identität der stationären Übernahmestation erfasst werden und zu jeder stationären Übernahmestation die Lagekoordinaten und die Informationen über die Identität der stationären Übernahmestation an eine übergeordnete Steuerung weitergeleitet und in der übergeordneten Steuerung gespeichert werden. Nach dem Aufstellen der stationären Übernahmestationen in einem Werksgelände kann somit in der Lernfahrt mittels der Sensoreinrichtung an dem autonomen Routenzug durch Vorbeifahren an den stationären Übernahmestationen über die Markierungen die Identität der jeweiligen Übernahmestation erfasst werden und über die in dem autonomen Routenzug vorhandenen Positionsdaten, die bei einem autonomen Routenzug bereits für dessen Fahrwegplanung bzw. Überwachung erforderlich sind, die Lagekoordinaten und somit der Aufstellungsort der entsprechenden Übernahmestationen erfasst werden, so dass in der übergeordneten Steuerung, beispielsweise einem Lagerverwaltungssystem oder einem Warenwirtschaftssystem, zu jeder Übernahmestation der jeweilige Aufstellungsort zugeordnet und abgespeichert werden kann. Sofern im Normalbetrieb des erfindungsgemäßen Systems der autonome Routenzug von der übergeordneten Steuerung einen Auftrag erhält, mit einem bestimmten angehängten Routenzuganhänger an einer bestimmten Übernahmestation eine Last zu übergeben, sind somit die Lagekoordinaten und somit der Aufstellungsort dieser bestimmten Übernahmestation bekannt und der autonome Routenzug kann einen entsprechenden Fahrweg zu der bestimmten Übernahmestation durchführen und an der bestimmten Übernahmestation mittels der von der Sensoreinrichtung erfassten Markierung der Übernahmestation in der definierten Umschlagposition anhalten und stoppen. Dadurch wird der Programmieraufwand bei dem erfindungsgemäßen System auf ein Minimum reduziert bzw. ganz vermeiden.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes System in einer perspektivischen Darstellung,
- Figur 2: eine stationäre Übernahmestation des erfindungsgemäßen System in einer Seitenansicht,
- Figur 3: die stationäre Übernahmestation der Figur 2 in einer perspektivische Darstellung,
- Figur 4: die stationäre Übernahmestation der Figur 2 in einer weiteren perspektivische Darstellung,
- Figur 5: einen Routenzuganhänger des erfindungsgemäßen System in einer Seitenansicht,
- Figur 6: den Routenzuganhänger der Figur 5 in einer perspektivische Darstellung,
- Figur 7: den Routenzuganhänger der Figur 5 in einer weiteren perspektivische Darstellung,
- Figur 8: eine perspektivische Darstellung eines Routenzuganhängers der Figuren 5 bis 7 an einer stationären Übernahmestation der Figuren 2 bis 4 in der definierten Übernahmeposition und
- Figur 9: eine weitere perspektivische Darstellung eines Routenzuganhängers der Figuren 5 bis 7 an einer stationären Übernahmestation der Figuren 2 bis 4 in der definierten Übernahmeposition.

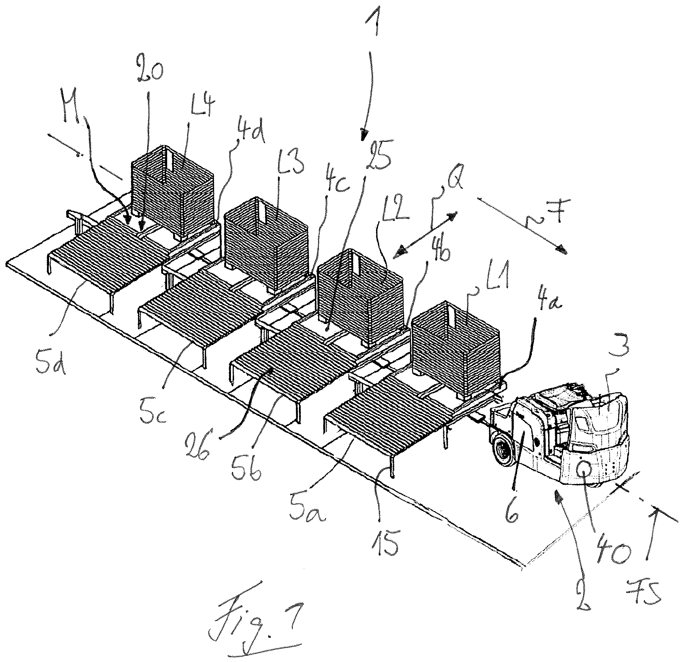

In der Figur 1 ist ein erfindungsgemäßes System 1 dargestellt, das zur Übergabe von Lasten L1-L4 zwischen einem Routenzuganhänger 4a-4d eines Routenzugs 2 und mindestens einer stationären, ortsfesten Übernahmestation 5a-5d besteht.

Das System 1 umfasst einen Routenzug 2, der ein Zugfahrzeug 3 und mindestens einen Routenzuganhänger 4a, 4b, 4c, 4d aufweist, und mindestes eine stationäre Übernahmestation 5a, 54b, 5c, 5d. Zur Übergabe von Lasten L1, L2, L3, L3, L4 zwischen einem der Routenzuganhänger 4a-4d und einer der stationären Übernahmestation 5a-5d befindet sich der entsprechende Routenzuganhänger 4a-4d in einer definierten Umschlagposition relativ zu der entsprechenden stationären Übernahmestation 5a-5d. In der definierten Umschlagposition befindet sich der entsprechende Routenzuganhänger 4a-4d - wie in der Figur 1 dargestellt ist - in einem vorgegebene Abstand seitlich neben der entsprechenden Übernahmestation 5a-5d, so dass die entsprechende Last L1-L4 in seitlicher Richtung Q von dem Routenzuganhänger 4a-4d auf die Übernahmestation 5a-5d bewegt werden kann bzw. von der Übernahmestaion 5a-5d auf den Routenzuganhänger 4a-4d bewegt werden kann.

Der Routenzug 2 ist bevorzugt autonom betrieben. Das Zugfahrzeug 3 ist von einem fahrerlosen Schlepper oder einem fahrerlosen Transportsystem gebildet, an den die Routenzuganhänger 4a-4d angehängt sind. Der autonome Routenzug 2 fährt mittels einer geeigneten, nicht näher dargestellten Sensorvorrichtung entlang der Übernahmestationen 5a-5d auf einer Fahrspur FS in einer Fahrtrichtung F.

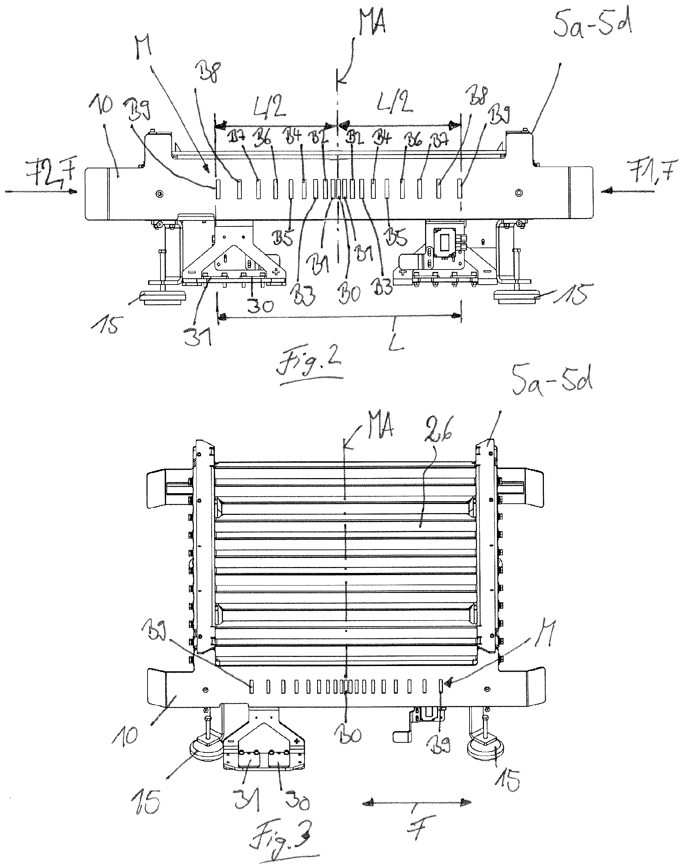

Wie in den Figuren 2 bis 4 dargestellt ist, ist jede stationäre Übernahmestation 5a-5d des Systems 1 an einer dem Routenzug 2 zugewandten Stirnseite 10 mit einer Markierung M versehen. Die Markierung M erstreckt sich über eine Länge L entlang der dem Routenzug 2 zugewandten Stirnseite 10 der stationäre Übernahmestation 5a-5d. Die Markierung M erstreckt sich somit mit der Länge L in Fahrtrichtung F des Routenzugs 2.

Wie aus den Figuren 2 bis 4 ersichtlich ist, ist die Markierung M achssymmetrisch zu einer Mittenlängsachse MA der stationären Übernahmestation 5a-5d angeordnet. Die Markierung M erstreckt sich somit ausgehend von der Mittenlängsachse MA mit der halben Länge L/2 zur linken Seite und mit der halben Länge L/2 zur rechten Seite der Übernahmestation 5a-5d.

Die Markierung M weist mehrere senkrecht angeordnete und voneinander beabstandete Balken B0 bis B9 auf. Der Balken B0 ist mittig, d.h. auf der Mittenlängsachse MA angeordnet. Mit den Balken B1 bis B9 erstreckt sich die Markierung M jeweils zur linken Seite und zur rechten Seite der Übernahmestation 5a-5d. Die Balken B0-B9 sind mit variierenden seitlichen Abständen zwischen zwei benachbart angeordneten Balken B0-B9 versehen. Der Abstand zwischen dem Balken B0 und dem Balken B1 ist der kleinste Abstand. Der Abstand zwischen den Balken B1 und B2 ist größer wie der Abstand zwischen den Balken B0 und B1. Entsprechend ist der Abstand zwischen den Balken B2 und B3 größer wie der Abstand zwischen den Balken B1 und B2. Entsprechend ist der Abstand zwischen den Balken B3 und B4 größer wie der Abstand zwischen den Balken B2 und B3. Entsprechend ist der Abstand zwischen den Balken B4 und B5 größer wie der Abstand zwischen den Balken B3 und B4. Entsprechend ist der Abstand zwischen den Balken B5 und B6 größer wie der Abstand zwischen den Balken B4 und B5. Entsprechend ist der Abstand zwischen den Balken B6 und B7 größer wie der Abstand zwischen den Balken B5 und B6. Entsprechend ist der Abstand zwischen den Balken B7 und B8 größer wie der Abstand zwischen den Balken B6 und B7. Entsprechend ist der Abstand zwischen den Balken B8 und B9 größer wie der Abstand zwischen den Balken B7 und B8.

Die Abstände zwischen zwei benachbart angeordneten Balken B0-B9 verringern sich somit ausgehend von der rechten bzw. linken Seite der Übernahmestation 5a-5d in Richtung zur Mittenlängsachse MA der stationären Übernahmestation 5a-5d.

Im dargestellten Ausführungsbeispiel weisen die Balken B0-B9 identische Gestalt auf.

Die Markierung M an den stationären Übernahmestationen 5a-5d ist somit als von den Balken B0-B9 gebildeter Barcode bzw. Strichcode ausgebildet.

Die Markierung M kann jeweils eine Information über die Identität der stationären Übernahmestation 5a-5d enthalten, beispielsweise einen Namen oder eine Nummer der jeweiligen Übernahmestation 5a-5d. Dadurch können mehrere Übernahmestationen 5a-5d eindeutig unterschieden werden.

Die Übernahmestationen 5a-5b stehen im dargestellten Ausführungsbeispiel mittels Füßen 15 auf einem Boden auf.

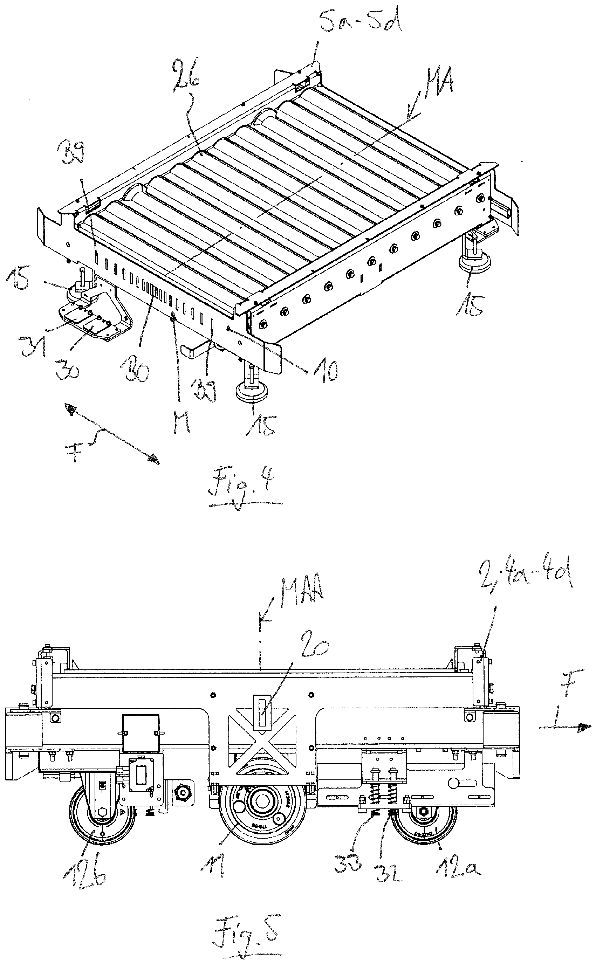

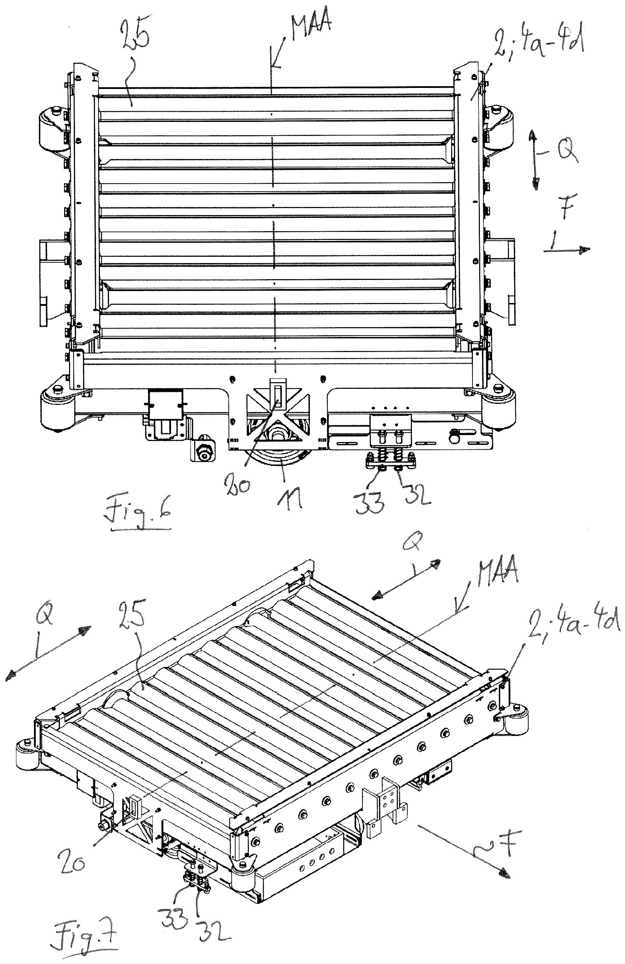

Wie in den Figuren 5 bis 7 dargestellt ist, ist der Routenzug 2 mit mindestens einer die Markierung M erfassenden Sensoreinrichtung 20 versehen. Im dargestellten Ausführungsbeispiel ist jeder Routenzuganhänger 4a-4d mit jeweils einer Sensoreinrichtung 20 versehen.

Die Sensoreinrichtung 20 ist hierbei an dem Routenzug 2 mit einer in Querrichtung Q des Routenzugs 2 ausgerichteten Erfassungsrichtung angeordnet. Im dargestellten Ausführungsbeispiel ist die Sensoreinrichtung 20 an einer Fahrzeugaußenseite des Routenzuganhängers 4a-4d angeordnet.

Im dargestellten Ausführungsbeispiel der Figuren 5 bis 7 ist an der in Fahrtrichtung F des Routenzugs 2 rechten Seite des Routenzugs 2 jeder Routenzuganhänger 4a-4b mit jeweils einer Sensoreinrichtung 20 versehen. Zusätzlich kann an der in Fahrtrichtung F des Routenzugs 2 linken Seite des Routenzugs 2 jeder Routenzuganhänger 4a-4b mit jeweils einer weiteren in den Figuren 5 bis 7 nicht ersichtlichen Sensoreinrichtung versehen sein.

Die Sensoreinrichtung 20 ist in Fahrzeuglängsrichtung des entsprechenden Routenzuganhängers 4a-4d im Wesentlichen mittig angeordnet und somit auf einer Mittenlängsachse MAA des jeweiligen Routenzuganhängers 4a-4d angeordnet.

Die Sensoreinrichtung 20 ist bevorzugt als Barcodeleser ausgebildet.

Bei dem erfindungsgemäßen System 1 weist das Zugfahrzug 3 ein batterieelektrisches Antriebssystem mit einem elektrischen Fahrantrieb auf, wobei das Zugfahrzeug 3 eine Batterie 6, die vorzugsweise als Traktionsbatterie ausgebildet ist, aufweist, die den Fahrantrieb des Zugfahrzeugs 3 versorgt.

Die Routenzuganhänger 4a-4d weisen jeweils ein Fahrwerk auf, mit dem sich die Routenzuganhänger 4a-4d auf dem Boden abstützen. In dem dargestellten Ausführungsbeispiel ist das Fahrwerk von einer Starrachse mit zwei Rädern 11 gebildet, die in Fahrzeuglängsrichtung des entsprechenden Routenzuganhängers 4a-4d im Wesentlichen mittig angeordnet sind. Zur Stabilisierung kann der Routenzuganhänger 4a-4b noch mit vorderen und hinteren Stützrollen 12a, 12b versehen sein. Die Sensoreinrichtung 20 ist in vertikaler Richtung oberhalb der Drehachsen der Räder 11 angeordnet.

Jeder Routenzuganhänger 4a-4d kann zur Lastübergabe mit einer elektromotorisch angetriebenen Fördereinrichtung 25 versehen sein. Im dargestellten Ausführungsbeispiel ist die Fördereinrichtung 25 als elektromotorisch angetriebene Rollenbahn ausgebildet.

Weiterhin kann jede Übernahmestation 5a-5d zur Lastübergabe mit einer elektromotorisch angetriebenen Fördereinrichtung 26 versehen sein. Im dargestellten Ausführungsbeispiel ist die Fördereinrichtung 26 als elektromotorisch angetriebene Rollenbahn ausgebildet.

Die Fördereinrichtung 25 der Routenzuganhänger 4a-4d und die Fördereinrichtung 26 der Übernahmestation 5a-5d sind bevorzugt in der definierten Umschlagposition von einer gemeinsamen Stromquelle angetrieben. Im dargestellten Ausführungsbeispiel wird hierzu die Batterie 6 des Routenzugs 2 genutzt. Um die Fördereinrichtung 26 der Übernahmestation 5a-5d in der definierten Umschlagposition mit Strom aus der Batterie 6 des Routenzugs 2 versorgen zu können, ist jede Übernahmestation 5a-5d mit Stromkontakten 30, 31 versehen, die mit Stromkontakten 32, 33 an den Routenzuganhängern 4a-4d in Verbindung bringbar sind. Die Stromkontakte 32, 33 an den Routenzuganhängern 4a-4d stehen zur Stromversorgung mit der Batterie 6 des Routenzugs 2 in Verbindung.

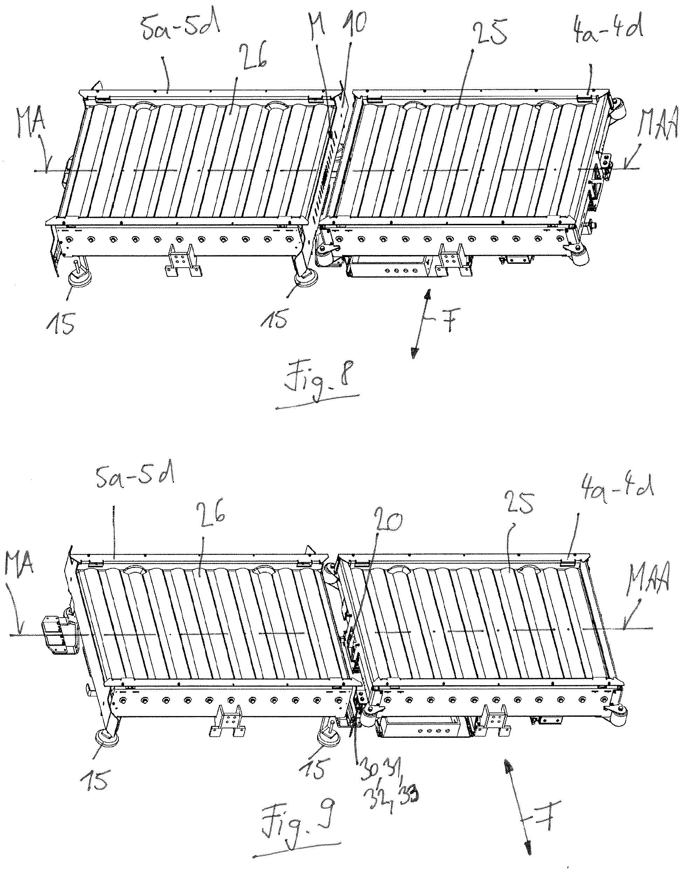

In den Figuren 8 und 9 ist die definierte Umschlagposition zwischen dem Routenzuganhänger 4a-4d und der Übernahmestation 5a-5d dargestellt. Der Routenzuganhänger 4a-4 befindet sich in der definierten Umschlagposition mittig neben der Übernahmestation 5a-5d, so dass die Mittenlängsachse MAA des Routenzuganhänger 4a-4d mit der Mittenlängsachse MA der stationären Übernahmestation 5a-5d fluchtet.

Um die Routenzuganhänger 4a-4d in der definierten Umschlagposition an der Übernahmestation 5a-5d anzuhalten, wird erfindungsgemäß die an dem Routenzug 2 angeordnete Sensoreinrichtung 20 und die an der jeweiligen Übernahmestation 5a-5d angebrachte Markierung M verwendet.

Die Sensoreinrichtung 20 steht hierzu mit einer den Fahrantrieb des Zugfahrzeugs 3 steuernden Fahrsteuerung 40 des Routenzugs in Wirkverbindung. Die Fahrsteuerung 40 ist derart ausgebildet, dass mittels der von der Sensoreinrichtung 20 des Routenzugs 2 erfassten Markierung M, die an der stationären entsprechenden Übernahmestation 5a-5d angebracht ist, der Routenzuganhänger 4a-4d an der stationären Übernahmestation 5a-5d in der definierten Umschlagposition angehalten wird.

Die Fahrsteuerung 40 ist hierbei derart ausgebildet, dass beim Vorbeifahren des Routenzuganhängers 4a-4d an der Übernahmestation 5a-5d ein Bremssignal erzeugt und somit ein Abbremsen des Routenzugs 2 durchgeführt wird, sobald die Sensoreinrichtung 20 am Routenzuganhänger 4a-4d die Markierung M an der stationären Übernahmestation 5a-5d erfasst. Das Abbremsen des Routenzugs 2 erfolgt hierbei derart, dass der Routenzuganhänger 4a-4d in der definierten Umschlagposition an der stationären Übernahmestation 5a-5d zum Stillstand kommt.

Im dargestellten Ausführungsbeispiel, wobei in der definierten Umschlagposition die Mittenlängsachse MAA des Routenzuganhängers 4a-4d mit der Mittenlängsachse MA der stationären Übernahmestation 5a-5d fluchtet und wobei der Balken B0 der Markierung M auf der Mittenlängsachse MA der stationären Übernahmestation 5a-5d und die Sensoreinrichtung 20 auf der Mittenlängsachse MAA des jeweiligen Routenzuganhängers 4a-4d angeordnet wird, entspricht die definierte Umschlagposition einer Stellung, in der die Sensoreinrichtung 20 der Routenzuganhänger 4a-4d den Balken B0 der Markierung M erfasst. Die definierte Umschlagposition wird bzw. ist somit erreicht, wenn die Sensoreinrichtung 20 am Routenzuganhänger 4a-4d den Balken B0 der Markierung M erfasst.

Fährt beispielsweise der Routenzuganhänger 4a-4d in Fahrtrichtung F1 (Figur 2) auf die Übernahmestation 5a-5d zu, an der zur Lastübergabe in der definierten Umschlagposition angehalten werden soll, erfasst die Sensoreinrichtung 20 zuerst den in der Figur 2 auf der rechten Seite befindlichen Balken B9 und somit den auf der rechten Seite befindlichen Beginn der Markierung M und anschließend die Markierungen B8, B7, B6, B5, B5, B3, B2, B1 nacheinander und dann anschließend die Markierung B0. Bei Erfassen der Markierung B9 durch die Sensoreinrichtung 20 kann dann von der Fahrsteuerung 40 des Routenzugs 2 ein Bremssignal erzeugt werden, mit dem der Routenzuganhänger 4a-4d in der definierten Umschlagposition angehalten und gestoppt wird. Die Länge L/2 der Markierung M steht somit als Bremsweg bzw. Anhalteweg des Routenzuganhängers 4a-4d zur Verfügung. Da die Länge L/2 der Markierung M bekannt ist bzw. die Länge L/2 der Markierung M mit der Sensoreinrichtung 20 vermessen wird und die Fahrgeschwindigkeit des Routenzugs 2, mit der der Routenzug 2 auf die Übernahmestation 5a-5d zufährt, ebenfalls bekannt ist, kann somit eine entsprechende Bremsrampe erzeugt werden, die es ermöglicht, den Routenzug 2 über die Länge L/2 in den Stillstand abzubremsen, so dass der Routenzuganhänger 4a-4d in der definierten Umschlagposition an der Übernahmestation 5a-5d angehalten wird und zum Stillstand kommt.

Fährt entsprechend der Routenzuganhänger 4a-4d in Fahrtrichtung F2 (Figur 2) auf die Übernahmestation 5a-5d zu, an der zur Lastübergabe in der definierten Umschlagposition angehalten werden soll, erfasst die Sensoreinrichtung 20 zuerst den in der Figur 2 auf der linken Seite befindlichen Balken B9 und somit den auf der linken Seite befindlichen Beginn der Markierung M und anschließend die Markierungen B8, B7, B6, B5, B5, B3, B2, B1 nacheinander und dann anschließend die Markierung B0. Bei Erfassen der Markierung B9 durch die Sensoreinrichtung 20 kann dann von der Fahrsteuerung 40 des Routenzugs 2 ein Bremssignal erzeugt werden, mit dem der Routenzuganhänger 4a-4d in der definierten Umschlagposition angehalten und gestoppt wird. Die Länge L/2 der Markierung M steht somit als Bremsweg bzw. Anhalteweg des Routenzuganhängers 4a-4d zur Verfügung. Da die Länge L/2 der Markierung M bekannt ist bzw. die Länge L/2 der Markierung M mit der Sensoreinrichtung 20 vermessen wird und die Fahrgeschwindigkeit des Routenzugs 2, mit der der Routenzug 2 auf die Übernahmestation 5a-5d zufährt, ebenfalls bekannt ist, kann somit eine entsprechende Bremsrampe erzeugt werden, die es ermöglicht, den Routenzug 2 über die Länge L/2 in den Stillstand abzubremsen, so dass der Routenzuganhänger 4a-4d in der definierten Umschlagposition an der Übernahmestation 5a-5d angehalten wird und zum Stillstand kommt.

Erfindungsgemäß wird somit mit der an jedem Routenzuganhänger 4a-4d angeordneten Sensoreinrichtung 20 beim Vorbeifahren des Routenzugs 2 an der stationären Übernahmestation 5a-5d die an der stationären Übernahmestation 5a-5d angeordnete Markierung M erfasst und anhand der von der Sensoreinrichtung 20 erfassten Markierung M durch den Eingriff auf die Fahrsteuerung des Routenzugs 2 der Routenzuganhänger 4a-4d an der stationären Übernahmestation 5a-5d in der definierten Umschlagposition angehalten. Die Markierung M an der stationären Übernahmestation 5a-5d gibt somit die definierte Umschlagposition und somit den Haltepunkt an der Übernahmestation 5a-5d vor, der mittels der Sensoreinrichtung 20 und deren Eingriff auf die Fahrsteuerung des Routenzugs 2 angefahren wird. Bei der Erfindung findet somit jeder Routenzuganhänger 4a-4d des Routenzugs 2, d.h. jeder Routenzuganhänger 4a-4d für sich, die definierten Umschlagpositionen (Haltepunkte) an den stationären Übernahmestationen 5a-5d für die Lastübergabe selbst und es müssen keine Haltepunkte vorab für die definierten Umschlagpositionen programmiert werden.

Wurde der Routenzuganhänger 4a-4d an einer entsprechenden Übernahmestation 5a-5d in der definierten Umschlagposition angehalten, können die Stromkontakte 32, 33 des Routenzuganhängers 4a-4d mit den Stromkontakten 30, 31 an der Übernahmestation 5a-5d kontaktiert werden, so dass die Fördereinrichtung 25 des Routenzuganhängers 4a-4d und die Fördereinrichtung 26 der Übernahmestation 5a-5d betrieben werden können und dadurch die Last L1-L4 von dem Routenzuganhänger 4a-4b auf die Übernahmestation 5a-5d bzw. von der Übernahmestation 5a-5d auf den Routenzuganhänger 4a-4b übergeben werden kann.

Bei dem erfindungsgemäßen System können die Übernahmestationen 5a-5d leicht in einem Werksgelänge umgesetzt werden, da die Übernahmestationen 5a-5d keinen Anschluss an eine Stromnetz benötigen. Um die Aufstellorte der Übernahmestationen 5a-5d zu erfassen, wird zur Inbetriebnahme des Systems mit dem Routenzug 2, beispielswiese dem autonomen Routenzug, eine Lernfahrt entlang der stationären Übernahmestationen 5a-5d durchgeführt. Mittels der Sensoreinrichtung 20 werden hierbei an jeder stationären Übernahmestation 5a-5d die Informationen über die Identität der stationären Übernahmestation 5a-5d erfasst und zu jeder stationären Übernahmestation 5a-5d die zugehörigen Lagekoordinaten und die Informationen über die Identität der stationären Übernahmestation 5a-5d an eine übergeordnete Steuerung weitergeleitet und in der übergeordneten Steuerung gespeichert. Nach dem Aufstellen der stationären Übernahmestationen 5a-5d in einem Werksgelände kann somit in der Lernfahrt mittels der Sensoreinrichtung 20 an dem autonomen Routenzug 2 durch Vorbeifahren an den stationären Übernahmestation 5a-5d über die Markierungen M die Identität der jeweiligen Übernahmestation 5a-5d erfasst werden und über die in dem autonomen Routenzug 2 vorhandenen Positionsdaten, die bei einem autonomen Routenzug 2 für dessen Fahrwegplanung bzw. Fahrwegüberwachung bereits vorhanden sind, die zu jeder Übernahestation 5a-5d gehörenden Lagekoordinaten und somit die Aufstellungsorte der entsprechenden Übernahmestationen 5a-5d erfasst werden, so dass in der übergeordneten Steuerung, beispielsweise einem Lagerverwaltungssystem oder einem Warenwirtschaftssystem, jeder Übernahmestation 5a-5d der jeweilige Name bzw. Nummer und der Aufstellungsort zugeordnet und abgespeichert werden kann. Sofern im Normalbetrieb des erfindungsgemäßen Systems 1 der autonome Routenzug 2 von der übergeordneten Steuerung einen Auftrag erhält, beispielsweise mit dem angehängten Routenzuganhänger 4b an der Übernahmestation 5b die Last L2 zu übergeben, sind somit die Lagekoordinaten und somit der Aufstellungsort der Übernahmestation 5b im Werksgelände bekannt und der autonome Routenzug 2 kann einen entsprechenden Fahrweg auf der Fahrspur FS zu der Übernahmestation 5b durchführen und an der bestimmten Übernahmestation 5b mittels der von der Sensoreinrichtung 20 erfassten Markierung M an der Übernahmestation 5b in der definierten Umschlagposition anhalten und stoppen. Für den Betrieb des Systems 1 sind somit nur entsprechende Fahrspuren FS entlang der Übernahmestationen 5a-5d zu definieren bzw. vorzugeben, es müssen jedoch keine Haltepunkte als definierte Umschlagpositionen für den Routenzug 2 an den jeweiligen Übernahmestationen 5a-5d für die Lastübergabe programmiert werden, da die definierten Umschlagpositionen und somit Haltepunkte an den jeweiligen Übernahmestationen 5a-5d für die Lastübergabe von jedem Routenzuganhänger 4a-4b mittels der die Markierungen M erfassenden Sensoreinrichtungen 20 selbst gefunden und angefahren werden.

## Patentansprüche

1. System (1) umfassend einen Routenzug (2), der ein Zugfahrzeug (3) und mindestens einen Routenzuganhänger (4a; 4b; 4c; 4d) aufweist, und mindestes eine stationäre Übernahmestation (5a; 5b; 5c; 5d) zur Übergabe von Lasten (L1; L2; L3; L4) zwischen dem Routenzuganhänger (4a; 4b; 4c; 4d) und der stationären Übernahmestation (5a; 5b; 5c; 5d), wobei sich der Routenzuganhänger (4a; 4b; 4c; 4d) zur Lastübergabe in einer definierten Umschlagposition relativ zur stationären Übernahmestation (5a; 5b; 5c; 5d) befindet, **dadurch gekennzeichnet, dass** die stationäre Übernahmestation (5a; 5b; 5c; 5d) mit einer Markierung (M) versehen ist, die an einer dem Routenzug (2) zugewandten Stirnseite (10) der stationären Übernahmestation (5a; 5b; 5c; 5d) angeordnet ist und sich entlang der dem Routenzug (2) zugewandten Stirnseite (10) der stationäre Übernahmestation (5a; 5b; 5c; 5d) erstreckt, und der Routenzug (2) mit mindestens einer die Markierung (M) erfassenden Sensoreinrichtung (20) versehen ist, wobei die Sensoreinrichtung (20) mit einer Fahrsteuerung (40) des Routenzugs (2) in Wirkverbindung steht und die Fahrsteuerung (40) derart ausgebildet ist, dass mittels der von der Sensoreinrichtung (20) des Routenzugs (2) erfassten Markierung (M) der stationären Übernahmestation (5a; 5b; 5c; 5d) der Routenzuganhänger (4a; 4b; 4c; 4d) an der stationären Übernahmestation (5a; 5b; 5c; 5d) in der definierten Umschlagposition angehalten wird.

2. System nach Anspruch 1, **dadurch gekennzeichnet, dass** die Fahrsteuerung (40) derart ausgebildet ist, dass bei Erfassen der Markierung (M) an der stationären Übernahmestation (5a; 5b; 5c; 5d) durch die Sensoreinrichtung (20) des Routenzugs (2) ein Abbremsen des Routenzugs (2) durchgeführt wird, derart, dass der Routenzuganhänger (4a; 4b; 4c; 4d) in der definierten Umschlagposition an der stationären Übernahmestation (5a; 5b; 5c; 5d) zum Stillstand kommt.

3. System nach Anspruch 1 oder 2, **dadurch gekennzeichnet, dass** die Markierung (M) achssymmetrisch zu einer Mittenlängsachse (MA) der stationären Übernahmestation (5a; 5b; 5c; 5d) angeordnet ist.

4. System nach einem der Ansprüche 1 bis 3, **dadurch gekennzeichnet, dass** die Markierung (M) mehrere senkrecht angeordnete Balken (B0-B9) mit variierenden Abständen zwischen zwei benachbart angeordneten Balken (B0-B9) aufweist.

5. System nach Anspruch 4, **dadurch gekennzeichnet, dass** sich die Abstände zwischen zwei benachbart angeordneten Balken (B0-B9) zu der Mittenlängsachse (MA) der stationären Übernahmestation (5a; 5b; 5c; 5d) verringern.

6. System nach Anspruch 4 oder 5, **dadurch gekennzeichnet, dass** die Balken (B0-B9) identische Gestalt aufweisen.

7. System nach einem der Ansprüche 1 bis 6, **dadurch gekennzeichnet, dass** die Sensoreinrichtung (20) an dem Routenzug (2) mit einer in Querrichtung (Q) des Routenzugs (2) ausgerichteten Erfassungsrichtung angeordnet ist.

8. System nach einem der Ansprüche 1 bis 7, **dadurch gekennzeichnet, dass** an der in Fahrtrichtung (F) des Routenzugs (2) linken Seite und rechten Seite des Routenzugs (2) jeweils eine Sensoreinrichtung (20) angeordnet ist.

9. System nach einem der Ansprüche 1 bis 8, **dadurch gekennzeichnet, dass** das Zugfahrzeug (3) mit der Sensoreinrichtung (20) versehen ist.

10. System nach einem der Ansprüche 1 bis 8, **dadurch gekennzeichnet, dass** jeder Routenzuganhänger (4a; 4b; 4c; 4d) mit der Sensoreinrichtung (20) versehen ist.

11. System nach Anspruch 10, **dadurch gekennzeichnet, dass** die Sensoreinrichtung (20) in Fahrzeuglängsrichtung des Routenzuganhängers (4a; 4b; 4c; 4d) im Wesentlichen mittig angeordnet ist.

12. System nach einem der Ansprüche 1 bis 11, **dadurch gekennzeichnet, dass** der Routenzug (2) autonom betrieben ist.

13. System nach einem der Ansprüche 1 bis 12, **dadurch gekennzeichnet, dass** der Routenzuganhänger (4a; 4b; 4c; 4d) und/oder die Übernahmestation (5a; 5b; 5c; 5d) eine Fördereinrichtung (25; 26) zur Lastübergabe einer Last (L1; L2; L3; L4) aufweist.

14. System nach einem der Ansprüche 1 bis 13, **dadurch gekennzeichnet, dass** die Markierung (M) eine Information über die Identität der stationären Übernahmestation (5a; 5b; 5c; 5d) enthält.

15. System nach einem der Ansprüche 1 bis 14, **dadurch gekennzeichnet, dass** die Sensoreinrichtung (20) als Barcodeleser ausgebildet ist.

16. Verfahren zum Betrieb eines Systems (1) nach einem der vorangegangenen Ansprüche, **dadurch gekennzeichnet, dass** zur Inbetriebnahme des Systems (1) mit dem Routenzug (2), insbesondere einem autonomen Routenzug, eine Lernfahrt entlang der stationären Übernahmestationen (5a; 5b; 5c; 5d) durchgeführt wird, wobei mittels der Sensoreinrichtung (20) an jeder stationären Übernahmestation (5a; 5b; 5c; 5d) die Informationen über die Identität der stationären Übernahmestation (5a; 5b; 5c; 5d) erfasst werden und zu jeder stationären Übernahmestation (5a; 5b; 5c; 5d) die Lagekoordinaten und die Informationen über die Identität der stationären Übernahmestation (5a; 5b; 5c; 5d) an eine übergeordnete Steuerung weitergeleitet und in der übergeordneten Steuerung gespeichert werden.

## Claims

1. System (1) comprising a tugger train (2), which has a traction vehicle (3) and at least one tugger train trailer (4a; 4b; 4c; 4d), and at least one stationary transfer station (5a; 5b; 5c; 5d) for transferring loads (L1; L2; L3; L4) between the tugger train trailer (4a; 4b; 4c; 4d) and the stationary transfer station (5a; 5b; 5c; 5d), wherein the tugger train trailer (4a; 4b; 4c; 4d), for load transfer, is located in a defined handling position relative to the stationary transfer station (5a; 5b; 5c; 5d), **characterized in that** the stationary transfer station (5a; 5b; 5c; 5d) is provided with a marking (M), which is arranged on an end face (10) of the stationary transfer station (5a; 5b; 5c; 5d) facing the tugger train (2) and extends along the end face (10) of the stationary transfer station (5a; 5b; 5c; 5d) facing the tugger train (2), and the tugger train (2) is provided with at least one sensor device (20) which detects the marking (M), wherein the sensor device (20) is operatively connected to a driving controller (40) of the tugger train (2) and the driving controller (40) is configured in such a way that, by means of the marking (M) of the stationary transfer station (5a; 5b; 5c; 5d) detected by the sensor device (20) of the tugger train (2), the tugger train trailer (4a; 4b; 4c; 4d) is stopped at the stationary transfer station (5a; 5b; 5c; 5d) in the defined handling position.

2. System according to Claim 1, **characterized in that** the driving controller (40) is configured in such a way that, when the marking (M) on the stationary transfer station (5a; 5b; 5c; 5d) is detected by the sensor device (20) of the tugger train (2), the tugger train (2) is braked in such a way that the tugger train trailer (4a; 4b; 4c; 4d) comes to a stop at the stationary transfer station (5a; 5b; 5c; 5d) in the defined handling position.

3. System according to Claim 1 or 2, **characterized in that** the marking (M) is arranged axially symmetrically with respect to a centre longitudinal axis (MA) of the stationary transfer station (5a; 5b; 5c; 5d).

4. System according to one of Claims 1 to 3, **characterized in that** the marking (M) has a plurality of vertically arranged bars (B0-B9) with varying distances between two adjacent bars (B0-B9).

5. System according to Claim 4, **characterized in that** the distances between two adjacent bars (B0-B9) are reduced towards the centre longitudinal axis (MA) of the stationary transfer station (5a; 5b; 5c; 5d).

6. System according to Claim 4 or 5, **characterized in that** the bars (B0-B9) have an identical shape.

7. System according to one of Claims 1 to 6, **characterized in that** the sensor device (20) is arranged on the tugger train (2) with a detection direction oriented in the transverse direction (Q) of the tugger train (2).

8. System according to one of Claims 1 to 7, **characterized in that** a sensor device (20) is arranged on both the left-hand side and the right-hand side of the tugger train (2) in the direction of travel (F) of the tugger train (2).

9. System according to one of Claims 1 to 8, **characterized in that** the traction vehicle (3) is provided with the sensor device (20).

10. System according to one of Claims 1 to 8, **characterized in that** each tugger train trailer (4a; 4b; 4c; 4d) is provided with the sensor device (20).

11. System according to Claim 10, **characterized in that** the sensor device (20) is arranged substantially centrally in the vehicle longitudinal direction of the tugger train trailer (4a; 4b; 4c; 4d).

12. System according to one of Claims 1 to 11, **characterized in that** the tugger train (2) is operated autonomously.

13. System according to one of Claims 1 to 12, **characterized in that** the tugger train trailer (4a; 4b; 4c; 4d) and/or the transfer station (5a; 5b; 5c; 5d) have/has a conveying device (25; 26) for transferring a load (L1; L2; L3; L4).

14. System according to one of Claims 1 to 13, **characterized in that** the marking (M) contains information about the identity of the stationary transfer station (5a; 5b; 5c; 5d).

15. System according to one of Claims 1 to 14, **characterized in that** the sensor device (20) is configured as a barcode reader.

16. Method for operating a system (1) according to one of the preceding claims, **characterized in that**, in order to start up the system (1) comprising the tugger train (2), in particular an autonomous tugger train, a learning trip is carried out along the stationary transfer station (5a; 5b; 5c; 5d), wherein the information about the identity of the stationary transfer station (5a; 5b; 5c; 5d) is detected by means of the sensor device (20) at each stationary transfer station (5a; 5b; 5c; 5d) and, for each stationary transfer station (5a; 5b; 5c; 5d), the position coordinates and the information about the identity of the stationary transfer station (5a; 5b; 5c; 5d) is passed on to a superordinate controller and stored in the superordinate controller.

## Revendications

1. Système (1) comprenant un train routier (2), lequel possède un véhicule tracteur (3) et au moins une remorque de train routier (4a ; 4b ; 4c ; 4d), et au moins un poste de prise en charge stationnaire (5a ; 5b ; 5c ; 5d) destiné au transfert de charges (L1 ; L2 ; L3 ; L4) entre la remorque de train routier (4a ; 4b ; 4c ; 4d) et le poste de prise en charge stationnaire (5a ; 5b ; 5c ; 5d), la remorque de train routier (4a ; 4b ; 4c ; 4d), en vue du transfert de charge, se trouvant dans une position de transbordement définie par rapport au poste de prise en charge stationnaire (5a ; 5b ; 5c ; 5d), **caractérisé en ce que** le poste de prise en charge stationnaire (5a ; 5b ; 5c ; 5d) est pourvu d'un repère (M), lequel est disposé au niveau d'un côté frontal (10) du poste de prise en charge stationnaire (5a ; 5b ; 5c ; 5d) faisant face au train routier (2) et s'étend le long du côté frontal (10) du poste de prise en charge stationnaire (5a ; 5b ; 5c ; 5d) faisant face au train routier (2), et le train routier (2) est pourvu d'au moins un dispositif capteur (20) qui détecte le repère (M), le dispositif capteur (20) se trouvant en liaison fonctionnelle avec une commande de conduite (40) du train routier (2) et la commande de conduite (40) étant configurée de telle sorte que la remorque de train routier (4a ; 4b ; 4c ; 4d) est arrêtée au niveau du poste de prise en charge stationnaire (5a ; 5b ; 5c ; 5d) dans la position de transbordement définie au moyen du repère (M) du poste de prise en charge stationnaire (5a ; 5b ; 5c ; 5d) détecté par le dispositif capteur (20) du train routier (2).

2. Système selon la revendication 1, **caractérisé en ce que** la commande de conduite (40) est configurée de telle sorte que lors de la détection du repère (M) sur le poste de prise en charge stationnaire (5a ; 5b ; 5c ; 5d) par le dispositif capteur (20) du train routier (2), un freinage du train routier (2) est effectué de telle sorte que la remorque de train routier (4a ; 4b ; 4c ; 4d) s'immobilise dans la position de transbordement définie au niveau du poste de prise en charge stationnaire (5a ; 5b ; 5c ; 5d).

3. Système selon la revendication 1 ou 2, **caractérisé en ce que** le repère (M) est disposé en symétrie axiale par rapport à un axe longitudinal central (MA) du poste de prise en charge stationnaire (5a ; 5b ; 5c ; 5d).

4. Système selon l'une des revendications 1 à 3, **caractérisé en ce que** le repère (M) possède plusieurs barres (B0-B9) disposées verticalement avec des écarts qui varient entre deux barres (B0-B9) disposées adjacentes.

5. Système selon la revendication 4, **caractérisé en ce que** les écarts entre deux barres (B0-B9) disposées adjacentes se réduisent vers l'axe longitudinal central (MA) du poste de prise en charge stationnaire (5a ; 5b ; 5c ; 5d).

6. Système selon la revendication 4 ou 5, **caractérisé en ce que** les barres (B0-B9) présentent une configuration identique.

7. Système selon l'une des revendications 1 à 6, **caractérisé en ce que** le dispositif capteur (20) est disposé sur le train routier (2) avec une direction de détection orientée dans la direction transversale (Q) du train routier (2).

8. Système selon l'une des revendications 1 à 7, **caractérisé en ce qu'**un dispositif capteur (20) est respectivement disposé du côté gauche et du côté droit du train routier (2), dans le sens de déplacement (F) du train routier (2).

9. Système selon l'une des revendications 1 à 8, **caractérisé en ce que** le véhicule tracteur (3) est pourvu du dispositif capteur (20).

10. Système selon l'une des revendications 1 à 8, **caractérisé en ce que** chaque remorque de train routier (4a ; 4b ; 4c ; 4d) est pourvue du dispositif capteur (20) .

11. Système selon la revendication 10, **caractérisé en ce que** le dispositif capteur (20) est disposé pour l'essentiel au centre dans la direction longitudinale de véhicule de la remorque de train routier (4a ; 4b ; 4c ; 4d) .

12. Système selon l'une des revendications 1 à 11, **caractérisé en ce que** le train routier (2) fonctionne de manière autonome.

13. Système selon l'une des revendications 1 à 12, **caractérisé en ce que** la remorque de train routier (4a ; 4b ; 4c ; 4d) et/ou le poste de prise en charge (5a ; 5b ; 5c ; 5d) possèdent un dispositif de transport (25 ; 26) servant au transfert d'une charge (L1 ; L2 ; L3 ; L4) .

14. Système selon l'une des revendications 1 à 13, **caractérisé en ce que** le repère (M) contient une information à propos de l'identité du poste de prise en charge stationnaire (5a ; 5b ; 5c ; 5d).

15. Système selon l'une des revendications 1 à 14, **caractérisé en ce que** le dispositif capteur (20) est réalisé sous la forme d'un lecteur de code à barres.

16. Procédé pour faire fonctionner un système (1) selon l'une des revendications précédentes, **caractérisé en ce que** pour la mise en service du système (1) avec un train routier (2), notamment un train routier autonome, un trajet d'apprentissage est effectué le long des postes de prise en charge stationnaires (5a ; 5b ; 5c ; 5d), les informations à propos de l'identité du poste de prise en charge stationnaire (5a ; 5b ; 5c ; 5d) étant acquises au moyen du dispositif capteur (20) au niveau de chaque poste de prise en charge stationnaire (5a ; 5b ; 5c ; 5d) et pour chaque poste de prise en charge stationnaire (5a ; 5b ; 5c ; 5d), les coordonnées de position ainsi que les informations à propos de l'identité du poste de prise en charge stationnaire (5a ; 5b ; 5c ; 5d) étant retransmises à une commande de niveau supérieur et mémorisées dans la commande de niveau supérieur.
